# FASCICULE DE BREVET EUROPEEN

(11) **EP 1 896 241 B1**
(45) Date de publication et mention de la délivrance du brevet: **05.05.2010**
(21) Numéro de dépôt: 06778584.0
(22) Date de dépôt: 07.06.2006
(51) Int. Cl.: B29C 44/12

(54) **UTILISATION D'UNE ENCRE D'IMPRESSION POUR LA FABRICATION DE PIECES A PEAU PREDECOUPEE**
VERWENDUNG VON DRUCKTINTE ZUR HERSTELLUNG VON TEILEN MIT VORGESCHNITTENER HAUT
USE OF A PRINTING INK FOR THE PRODUCTION OF PARTS HAVING A PRECUT SKIN

(30) Priorité: 29.06.2005 FR 0506658
(43) Date de publication de la demande: 12.03.2008
(73) Titulaire: Faurecia Interieur Industrie, 92000 Nanterre (FR)
(72) Inventeur: AMRANI, Karim, 60114 Méru (FR)
(74) Mandataire: Domenego, Bertrand
(86) Numéro de dépôt international: PCT/FR2006/001290
(87) Numéro de publication internationale: WO 2007/003728

(56) Documents cités:
- EP-A- 1 288 081
- DE-U1- 29 821 409
- PATENT ABSTRACTS OF JAPAN vol. 1998, no. 06, 30 avril 1998 (1998-04-30) & JP 10 044908 A (OKAMOTO IND INC), 17 février 1998 (1998-02-17)
- PATENT ABSTRACTS OF JAPAN vol. 1998, no. 06, 30 avril 1998 (1998-04-30) & JP 10 029488 A (NIPPON PLAST CO LTD), 3 février 1998 (1998-02-03)
- PATENT ABSTRACTS OF JAPAN vol. 018, no. 366 (M-1636), 11 juillet 1994 (1994-07-11) & JP 06 099785 A (TOYODA GOSEI CO LTD), 12 avril 1994 (1994-04-12)

## Description

La présente invention concerne une nouvelle utilisation d'une encre d'impression pour la fabrication de pièces à peau prédécoupée, et plus précisément d'une encre visqueuse d'impression pour la protection d'une entaille formée dans une peau d'une pièce comprenant une mousse dont une face est couverte d'une peau.

On sait déjà réaliser des pièces dans lesquelles une peau est disposée sur une mousse, celle-ci pouvant elle-même être placée sur un support ou non. De telles pièces sont en général fabriquées par disposition de la peau contre une surface de moule, puis par injection ou formation in situ de mousse.

Une utilisation d'un matériel visquex selon le préambule de la revendication 1 est divulguée dans DE 29 821 409 U1.

On utilise en particulier de telles pièces pour les planches de bord et les garnitures de compartiments des passagers d'automobile. Il est alors fréquemment nécessaire que des sacs gonflables protecteurs ou "airbags" soient disposés derrière ces pièces. Pour faciliter le fonctionnement de ces sacs gonflables, la pièce apparente a des lignes de faiblesse qui suivent le contour d'un élément qui doit être arraché lors du fonctionnement du sac gonflable. Pour que cet arrachement soit facile, le support le cas échéant et la peau sont localement affaiblis suivant le contour voulu pour l'arrachement.

Dans le cas de la peau, il est courant de réaliser une entaille qui suit un trajet, continu ou discontinu, correspondant à une partie au moins du contour d'ouverture. Par exemple, le trajet peut être pratiquement fermé pour l'arrachement d'une partie de la pièce, ou il peut délimiter tous les côtés sauf un du polygone délimitant la partie à arracher qui, lors du fonctionnement du sac gonflable, pivote autour du côté qui n'est pas affaibli.

Pour la réalisation de telles pièces, on a donc réalisé des entailles à la face intérieure de la peau afin que l'entaille ne soit pas apparente du côté extérieur visible.

La simple formation d'une entaille, sans modification du procédé de fabrication, ne donne pas satisfaction. En effet, la mousse, lorsqu'elle se forme ultérieurement à la face intérieure de la peau, peut pénétrer dans l'entaille et présenter alors deux inconvénients.

Le premier inconvénient est que les produits chimiques de la mousse peuvent traverser la partie amincie de la peau correspondant au fond de l'entaille, si bien qu'une marque apparaît du côté visible. Le second inconvénient est que la mousse colle aux faces de l'entaille et peut même rapprocher ces faces, en provoquant leur "recollement". Il arrive même que la résistance mécanique de l'entaille remplie de mousse ne soit pas inférieure à celle de la peau sans entaille. L'entaille est alors inopérante.

Pour la solution de ce problème, on a déjà appliqué à l'entaille un produit de démoulage destiné à empêcher le collage de la mousse dans l'entaille. Une telle application pose cependant des problèmes. En effet, elle ne doit pas être trop étendue autour de l'entaille pour ne pas empêcher l'adhérence de la mousse à la peau, car la différence de comportement par rapport aux parties ayant l'adhérence peau-mousse peut apparaître du côté visible.

Cependant, le défaut le plus important est que le produit de démoulage appliqué ne parvient pas toujours au fond étroit de l'entaille. Si l'application jusqu'au fond de l'entaille n'est pas vérifiée, les inconvénients précités peuvent apparaître. Il est donc nécessaire d'utiliser une opération supplémentaire de vérification de la présence du produit de démoulage au fond de l'entaille sur toute la longueur de celle-ci. Bien que cette opération puisse être facilitée par utilisation d'un produit de démoulage de couleur qui contraste avec celle de la peau, elle nécessite néanmoins une vérification supplémentaire et est donc coûteuse.

On a donc déjà envisagé de protéger l'entaille contre la pénétration de la mousse, par formation d'un pont fermant l'ouverture de l'entaille.

Ainsi, le document DE-298 21 409 décrit une pièce de garniture intérieure de compartiment des passagers d'automobile, ayant une couche qui favorise l'adhérence formée entre la peau et la mousse ; une entaille est fermée par une ouverture destinée à empêcher la pénétration de la couche favorisant l'adhérence. Ce document indique simplement que l'entaille est protégée par une couverture qui peut être une "laque protectrice" qui remplit l'emplacement affaibli mais n'a qu'une faible résistance, de sorte que le fonctionnement de l'entaille ne soit pas perturbé. Selon ce document, la laque protectrice remplit au moins partiellement l'entaille et couvre la partie voisine de celle-ci.

Le document EP-1 288 081 décrit la disposition, sur un entaille, d'une "couche d'étanchéité". Celle-ci peut être formée de polyuréthanne. Le document ne cite que la pulvérisation comme procédé pour la réalisation de cette couverture, et indique que la matière peut être un polyuréthanne. La pulvérisation nécessite une matière première relativement fluide pour donner la finesse nécessaire aux particules.

Après des essais relatifs à la mise en oeuvre des enseignements de ce document EP-1 288 081, la demanderesse s'est rendu compte qu'il n'était pas possible de réaliser une couche de couverture ne pénétrant pas dans l'entaille par simple application d'un produit par pulvérisation. Elle s'est aussi rendu compte que, étant donné la largeur de l'entaille au niveau de la face intérieure de la peau (au moins plusieurs dixièmes de millimètre), il n'était pas possible de former une couverture continue sur l'ouverture de l'entaille avec une composition ayant une fluidité suffisante pour pouvoir être appliquée par pulvérisation.

Des essais ont alors montré qu'un produit visqueux appliqué par impression permettait de former une couverture continue sur l'ouverture de l'entaille, ce produit étant si visqueux qu'il ne peut pas être appliqué par pulvérisation.

Plus précisément, l'invention concerne une utilisation nouvelle d'une encre visqueuse d'impression pour la protection d'une entaille formée dans une peau destinée à une pièce fabriquée par un procédé qui comprend la réalisation d'une peau ayant une entaille à sa face intérieure, la couverture de l'entaille par un organe protecteur, et la formation d'une mousse au contact de la face intérieure de la peau ; selon l'invention, l'étape de couverture de l'entaille par un organe protecteur comprend l'application d'une encre de viscosité au moins égale à 0,6 St par une opération d'impression, puis son durcissement au moins partiel, de sorte que l'encre forme une couche qui constitue un pont sur l'entaille, sans remplir celle-ci au moins jusqu'à son fond.

Dans le cadre de l'invention, une encre "visqueuse" correspond à une viscosité d'au moins 0,6 St, avantageusement de l'ordre de 1 à 4 St. Il est même possible que l'encre visqueuse ait la consistance d'une pâte.

De préférence, la nouvelle utilisation selon l'invention comprend en outre, pour l'impression, une étape de sélection d'une encre dont la composition chimique et les propriétés physiques sont telles que son adhérence à la peau est inférieure à son adhérence à la mousse, après la formation de celle-ci.

De préférence, la nouvelle utilisation selon l'invention comprend en outre, pour l'impression, une étape de sélection d'une encre telle que, après impression, elle forme une couche d'épaisseur comprise entre 20 et 200 µm.

L'opération d'impression est avantageusement une sérigraphie ou une impression offset.

Le durcissement au moins partiel est effectué par séchage, par gélification, par polymérisation avec réticulation ou par irradiation ultraviolette, selon les propriétés de l'encre visqueuse utilisée.

Lorsque l'entaille suit un trajet ayant au moins une partie allongée, l'opération d'impression de l'encre visqueuse est avantageusement effectuée sur tout le trajet avec un débordement tout autour du trajet. De préférence, le débordement, de chaque côté du trajet, est au moins égal à la moitié de la largeur de l'entaille dans le plan de la face intérieure.

D'autres caractéristiques et avantages de l'invention seront mieux compris à la lecture de la description qui va suivre d'un exemple de réalisation, faite en référence au dessin annexé sur lequel :
la figure 1 est une coupe très agrandie illustrant l'utilisation d'une encre visqueuse selon l'invention ;
la figure 2 est une coupe analogue à la figure 1, illustrant le comportement de la couche d'encre lorsque la mousse est décollée de la peau ; et
la figure 3 représente un exemple de trajet d'une entaille destinée à délimiter une porte de passage d'un sac gonflable.

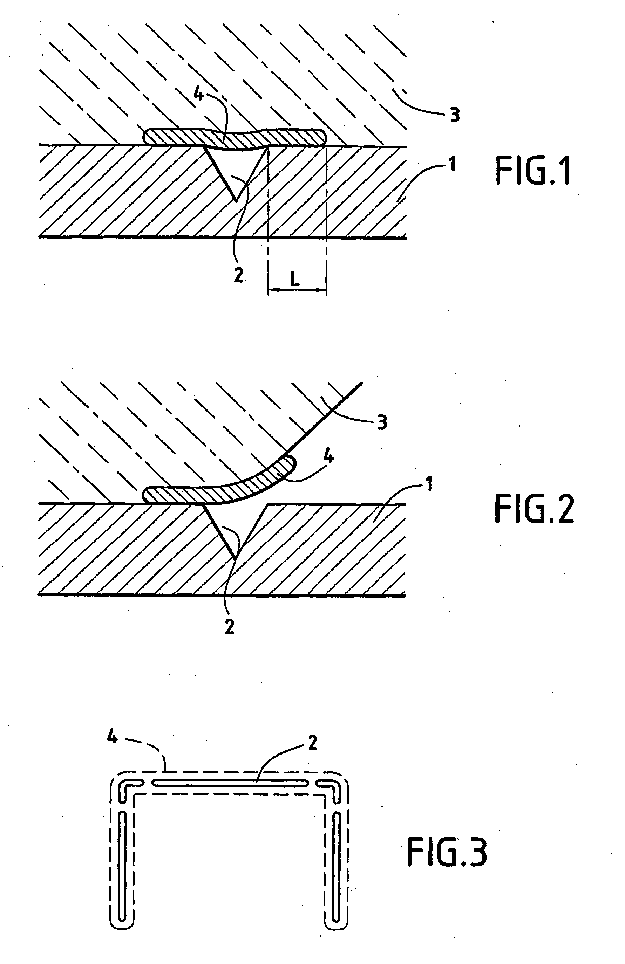

De manière connue, lorsqu'on injecte une mousse, par exemple repérée par la référence 3 sur la figure 1, dans un moule muni sur une face d'une peau 1 ayant une entaille 2, la mousse injectée pénètre librement dans l'entaille 2. Elle a alors pour effet non seulement de remplir celle-ci, en réduisant ainsi l'effet d'affaiblissement mécanique, mais en outre, de réagir chimiquement en ayant tendance à rapprocher les parois de l'entaille 2, suivant un phénomène appelé "recollement". On constate, au cours d'essais destructif, que la peau peut se rompre ailleurs qu'à l'emplacement de l'entaille 2.

La solution apportée à ce problème comprend la formation d'un pont sur l'entaille pour empêcher la pénétration de la mousse. Ce pont est obtenu selon l'invention par impression d'une encre très visqueuse, avantageusement pratiquement pâteuse, repérée par la référence 4 sur les figures.

L'avantage d'un procédé d'impression est qu'il ne fait pas pénétrer l'encre à l'intérieur de l'entaille 2. L'avantage d'une encre visqueuse est qu'elle reste cohérente au-dessus de l'entaille, entre les parties d'encre appliquées de part et d'autre de l'entaille. L'invention repose sur la combinaison des moyens qui donnent ces deux avantages.

Le procédé d'impression peut être pratiquement quelconque, bien que la sérigraphie et l'impression offset soient particulièrement avantageuses. La sérigraphie est particulièrement avantageuse, car elle peut être mise en oeuvre avec des stencils habituellement utilisés, ayant des maillages de 40 à 70 par exemple.

La viscosité peut être quelconque du moment qu'elle dépasse 0,6 St. Il est cependant avantageux d'utiliser une encre plus visqueuse, de 1 à 4 St, et même de consistance pâteuse, c'est-à-dire de viscosité encore plus élevée que les valeurs indiquées.

En outre, on constate expérimentalement qu'on obtient l'effet recherché lorsque la largeur de débordement, c'est-à-dire la largeur L sur laquelle l'encre visqueuse 4 déborde au-delà du bord de l'entaille 2, atteint au moins la moitié de la largeur de l'entaille dans le plan de la face intérieure. En général, cette largeur de l'entaille est un peu inférieure ou égale à la profondeur de l'entaille.

Le procédé comprend le durcissement au moins partiel de l'encre avant la formation de la mousse. Selon la nature de l'encre, ce durcissement peut être obtenu par séchage, par évaporation d'au moins un solvant, par polymérisation avec réticulation dans le cas d'une encre à deux composants, ou par irradiation ultraviolette dans le cas d'une encre photosensible.

Selon un perfectionnement avantageux de l'invention, la composition chimique et les propriétés physiques de l'encre sont telles que, après disposition de la mousse 3, l'adhérence de la couche d'encre durcie 4 à la mousse 3 est supérieure à son adhérence à la peau 1. De cette manière, la couche d'encre 4 a tendance à se comporter comme la mousse 3 plutôt que comme la peau 1, de sorte que la présence de cette couche d'encre 4 à l'intérieur de la pièce n'est pas visible même lorsque la largeur de débordement est importante.

La figure 3 représente un exemple d'application de l'invention. On note que l'entaille 2 est discontinue et comporte cinq parties qui délimitent trois côtés d'une trappe de sac gonflable. Le tracé en pointillé entourant l'entaille 2 représente les limites de la couche 4 d'encre visqueuse. On note que l'encre déborde de tous les côtés de l'entaille, même aux extrémités.

Dans un exemple d'application, la peau 1 est une peau souple de chlorure de polyvinyle, la mousse 3 est à base de polyuréthanne, et l'encre visqueuse est un plastisol de chlorure de polyvinyle, par exemple un "blanc de spécialité Wilflex", couramment utilisé dans la technique du "transfert".

Ces encres formées de plastisols présentent une gélification (à une température comprise entre 65 et 120 °C) à un état sec mais non fixé, puis une fixation ou cuisson (à une température de l'ordre de 160 °C) qui les transforme en un film résistant, mais gardant une certaine souplesse sur un textile. En outre, ces encres ont l'avantage d'être pratiquement inodores et pâteuses, de ne pas sécher spontanément, de pouvoir être appliquées avec un stencil de maillage courant (par exemple 25 à 90 mailles par centimètre), et de ne pas tacher.

Dans un exemple, le procédé mis en oeuvre comprend une première étape de fabrication par rotomoulage d'une peau, par exemple de chlorure de polyvinyle, à une épaisseur de 1 à 1,4 mm.

Dans une étape suivante, une lame chauffante de section en V d'angle de l'ordre de 25° forme une ligne de prédécoupe, par exemple pour sac gonflable, afin que l'épaisseur résiduelle de la peau soit comprise entre 0,4 et 0,6 mm.

Dans une étape suivante, l'encre est déposée par sérigraphie (ou tout autre procédé d'impression convenant aux plastisols) sur la ligne de prédécoupe et autour de celle-ci. La largeur de débordement n'est pas critique dans la mesure où l'encre forme un joint efficace sur toute l'ouverture de la ligne de prédécoupe. La largeur totale du dépôt d'encre, en direction transversale à la longueur de la ligne, peut être de 10 mm, mais une largeur de 4 mm seulement s'est révélée suffisante.

Dans une étape suivante, la peau sérigraphiée est étuvée à une température et pendant un temps normalement utilisés dans le procédé classique de fabrication de pièces à peau et mousse, pour le ramollissement de la peau avant moussage. Cette température est avantageusement comprise entre les températures de gélification et de cuisson de l'encre particulière utilisée. Dans un exemple, la peau reste 1,5 min dans une étuve ayant une température de 110°C.

Dans une étape suivante, la peau étant disposée dans un moule, une mousse est injectée et entoure le film d'encre appliqué qui s'incruste dans les pores ouverts de la mousse, tout en continuant à fermer de manière étanche l'ouverture de la ligne de prédécoupe. La température atteinte dans cette opération est inférieure à la température de cuisson de l'encre, si bien que celle-ci reste à un état gélifié non fixé.

Dans cet exemple, le film d'encre joue son rôle de joint, sans avoir subi de cuisson et sans avoir adhéré à la peau. Il n'a donc aucun effet critique qui pourrait gêner le fonctionnement du sac gonflable, notamment l'ouverture de la peau le long de la ligne de prédécoupe.

Les principaux avantages de l'invention sont la suppression des inconvénients précités, c'est-à-dire que les produits chimiques de la mousse ne peuvent pas traverser la partie amincie en formant une marque du côté visible de la peau, et que la mousse ne colle pas et ne "recolle" pas la ligne de prédécoupe. Ces avantages sont obtenus par une simple opération d'impression dont le coût peut être faible, alors que les produits réalisés ont un excellent aspect sans défaut visible.

## Revendications

1. Utilisation d'une encre visqueuse d'impression pour la protection d'une entaille formée dans une peau destinée à une pièce fabriquée par un procédé qui comprend
la réalisation d'une peau (1) ayant une entaille (2) à sa face intérieure,
la couverture de l'entaille (2) par un organe protecteur, et
la formation d'une mousse (3) au contact de la face intérieure de la peau,
**caractérisée en ce que** l'étape de couverture de l'entaille (2) par un organe protecteur comprend
l'application sur l'entaille (2) d'une encre de viscosité au moins égale à 0,6 St par une opération d'impression, puis
le durcissement au moins partiel de l'encre, de sorte que l'encre forme une couche (4) qui constitue un pont sur l'entaille (2), sans remplir celle-ci au moins jusqu'à son fond.

2. Utilisation selon la revendication 1, **caractérisée en ce qu'**elle comprend en outre la sélection pour l'impression d'une encre telle que son adhérence à la peau (1) est inférieure à son adhérence à la mousse (3) après la formation de celle-ci.

3. Utilisation selon l'une des revendications 1 et 2, **caractérisée en ce qu'**elle comprend en outre la sélection pour l'impression d'une encre telle que, après impression, elle forme une couche (4) d'épaisseur comprise entre 20 et 200 µm.

4. Utilisation selon l'une quelconque des revendications 1 à 3, **caractérisée en ce que** l'opération d'impression est une sérigraphie.

5. Utilisation selon l'une quelconque des revendications 1 à 3, **caractérisée en ce que** l'opération d'impression est une impression offset.

6. Utilisation selon l'une quelconque des revendications 1 à 5, **caractérisée en ce que** l'encre est d'un type qui contient un solvant, et le durcissement au moins partiel est effectué par séchage.

7. Utilisation selon l'une quelconque des revendications 1 à 5, **caractérisée en ce que** l'encre est un plastisol, et le durcissement au moins partiel est effectué par gélification.

8. Utilisation selon l'une quelconque des revendications 1 à 5, **caractérisée en ce que** l'encre est photosensible, et le durcissement au moins partiel est effectué par irradiation ultraviolette.

9. Utilisation selon l'une quelconque des revendications précédentes, **caractérisée en ce que**, l'entaille (2) suit un trajet ayant au moins une partie allongée, et l'opération d'impression de l'encre visqueuse est effectuée sur tout le trajet avec un débordement (L) tout autour du trajet.

10. Utilisation selon la revendication 9, **caractérisée en ce que** le débordement (L), de chaque côté du trajet, est au moins égal la moitié de la largeur de l'entaille dans le plan de la face intérieure.

## Claims

1. Use of a viscous printing ink for protecting a notch formed in a skin intended for a part produced by a process which comprises
producing a skin (1) having a notch (2) on its inner face,
covering the notch (2) with a protective component, and
forming a foam (3) on contact with the inner face of the skin,
**characterised in that** the step of covering the notch (2) with a protective component comprises
applying to the notch (2) an ink with a viscosity at least equal to 0.6 St by means of a printing operation, then
hardening the ink at least partially such that the ink forms a layer (4) which constitutes a bridge over the notch (2) without filling the latter, at least down to its base.

2. The use according to Claim 1, **characterised in that** it further comprises selecting for the printing an ink such that its adhesion to the skin (1) is less than its adhesion to the foam (3) after the latter has been formed.

3. The use according to either of Claims 1 and 2, **characterised in that** it further comprises selecting for the printing an ink such that, after printing, it forms a layer (4) with a thickness between 20 and 200 µm.

4. The use according to any of Claims 1 to 3, **characterised in that** the printing operation is screen printing.

5. The use according to any of Claims 1 to 3, **characterised in that** the printing operation is offset printing.

6. The use according to any of Claims 1 to 5, **characterised in that** the ink is of a type which contains a solvent, and the at least partial hardening is implemented by drying.

7. The use according to any of Claims 1 to 5, **characterised in that** the ink is a plastisol, and the at least partial hardening is implemented by gelification.

8. The use according to any of claims 1 to 5, **characterised in that** the ink is photo-sensitive, and the at least partial hardening is implemented by ultraviolet irradiation.

9. The use according to any of the preceding claims, **characterised in that** the notch (2) follows a line having at least one elongated portion, and the viscous ink printing operation is implemented over the whole line with an overlap (L) all around the line.

10. The use according to Claim 9, **characterised in that** the overlap (L) to either side of the line is at least equal to half the width of the notch in the plane of the inner face.

## Patentansprüche

1. Verwendung einer zähflüssigen Drucktinte für den Schutz einer Kerbe, die in einer Haut ausgebildet ist, die für ein Teil bestimmt ist, das durch ein Verfahren hergestellt wird, das umfasst:
die Herstellung einer Haut (1), die an ihrer Innenseite eine Kerbe (2) besitzt,
die Abdeckung der Kerbe (2) durch ein Schutzorgan und
die Bildung eines Schaumstoffs (3) in Kontakt mit der Innenseite der Haut,
**dadurch gekennzeichnet, dass** der Schritt des Abdeckens der Kerbe (2) durch ein Schutzorgan umfasst:
Anbringen einer Tinte mit einer Viskosität, die wenigstens gleich 0,6 St ist, auf der Kerbe (2) durch einen Druckvorgang, und dann
wenigstens teilweises Härten der Tinte in der Weise, dass die Tinte eine Schicht (4) bildet, die eine Brücke über der Kerbe (2) bildet, ohne dass diese wenigstens bis zu ihrem Boden gefüllt wird.

2. Verwendung nach Anspruch 1, **dadurch gekennzeichnet, dass** sie außerdem die Auswahl einer Tinte für den Druck umfasst, derart, dass deren Haftung auf der Haut (1) kleiner ist als ihre Haftung auf dem Schaumstoff (3) nach dessen Bildung.

3. Verwendung nach einem der Ansprüche 1 und 2, **dadurch gekennzeichnet, dass** sie außerdem die Auswahl einer Tinte für den Druck umfasst, derart, dass sie nach dem Druck eine Schicht (4) mit einer Dicke im Bereich von 20 bis 200 µm bildet.

4. Verwendung nach einem der Ansprüche 1 bis 3, **dadurch gekennzeichnet, dass** der Druckvorgang ein Siebdruck ist.

5. Verwendung nach einem der Ansprüche 1 bis 3, **dadurch gekennzeichnet, dass** der Druckvorgang ein Offsetdruck ist.

6. Verwendung nach einem der Ansprüche 1 bis 5, **dadurch gekennzeichnet, dass** die Tinte von einem Typ ist, der ein Lösungsmittel enthält, und die wenigstens teilweise Härtung durch Trocknen erfolgt.

7. Verwendung nach einem der Ansprüche 1 bis 5, **dadurch gekennzeichnet, dass** die Tinte ein Plastisol ist und dass die wenigstens teilweise Härtung durch Gelierung erfolgt.

8. Verwendung nach einem der Ansprüche 1 bis 5, **dadurch gekennzeichnet, dass** die Tinte lichtempfindlich ist und die wenigstens teilweise Härtung durch Ultraviolettbestrahlung erfolgt.

9. Verwendung nach einem der vorhergehenden Ansprüche, **dadurch gekennzeichnet, dass** die Kerbe (2) einem Weg mit wenigstens einem lang gestreckten Abschnitt folgt und der Druckvorgang der zähflüssigen Tinte auf dem gesamten Weg mit einer Überdeckung (L) um den gesamten Weg erfolgt.

10. Verwendung nach Anspruch 9, **dadurch gekennzeichnet, dass** die Überdeckung (L) auf jeder Seite des Wegs wenigstens gleich der halben Breite der Kerbe in der Ebene der Innenseite ist.
